# EUROPEAN PATENT APPLICATION

(11) **EP 4 751 872 A1**
(43) Date of publication of application: **03.06.2026**
(21) Application number: 25217585.6
(22) Date of filing: 21.11.2025
(51) Int. Cl.: B29B 11/16, B32B 5/26

(54) **METHODS FOR MANUFACTURING NON-CRIMP FABRIC AND COMPOSITE STRUCTURES COMPRISING NON-CRIMP FABRIC WITH BINDER, AND PREFORM COMPRISING NON-CRIMP FABRIC WITH BINDER**

(30) Priority: 27.11.2024 US 202418962631
(71) Applicant: The Boeing Company, Arlington, VA 22202 (US)
(72) Inventor: Tsotsis, Thomas K., Arlington, VA, 22202 (US)
(74) Representative: Hoffmann Eitle

(57) **Abstract**

A method for manufacturing a non-crimp fabric includes providing a plurality of layers of continuous fibers (10, 20) held together by stitch threads (30) and applying a binder (40, 50) between adjacent layers of the plurality of layers of continuous fibers and on an outer layer of the plurality of layers of continuous fibers, wherein the binder has an activation temperature below a melting temperature of the stitch threads.

## Description

### FIELD

The present application relates to the field of composite materials, particularly non-crimp fabrics designed for use in high-performance composite structures, which are used in industries such as aerospace, automotive, and renewable energy.

### BACKGROUND

Non-crimp fabrics are widely used in composite manufacturing due to their ability to align continuous fibers without crimping, enhancing mechanical properties such as strength and stiffness in the final composite structures. The layers within non-crimp fabrics are typically secured by stitching comprising fine-filament stitch threads, creating a stable, crimp-free configuration that supports effective load transfer along fibers and promotes resin flow during composite processing. The stitching includes a variety of stitching styles, without limitation, such as chain, lock, or tricot stitches using threads made from one or more yarns that are plied and/or twisted to form each thread. The stitch threads can comprise continuous or discontinuous filaments. This configuration has made non-crimp fabrics valuable in applications where lightweight, high-integrity structures are desired.

A common approach in the prior art to maintain the stability of shaped non-crimp fabric preforms during handling and processing is the application of tackifyng agents, which provide temporary adhesion between layers to hold the preform shape through initial processing. Tackifying agents help preserve the preform's configuration and are particularly useful for smaller or simpler structures. For larger or more-complex structures, additional techniques are often explored to ensure stability across extensive surface areas while also allowing effective resin flow during resin infusion.

Accordingly, those skilled in the art continue with research and development in the field of non-crimp fabrics and composite preforms to enhance preform stability, improve handling efficiency, and optimize resin-infusion techniques, particularly for larger or more-complex structures.

### SUMMARY

Disclosed are methods for manufacturing a non-crimp fabric.

In one example, the disclosed method comprises: providing a plurality of layers of continuous fibers held together by stitch threads; and applying a binder between adjacent layers of the plurality of layers of continuous fibers and on an outer layer of the plurality of layers of continuous fibers, wherein the binder has an activation temperature below a melting temperature of the stitch threads.

In embodiments, the binder is applied before the stitch threads.

Optionally, the binder is applied on the outer layer of the plurality of layers of continuous fibers after the stitch threads are applied.

In embodiments, the binder is in a form of a powder.

Optionally, the powder has little to no tack at room temperature.

In embodiments, the binder is in a form of a nonwoven veil.

In embodiments, an interlayer-toughening veil is provided between adjacent layers of the plurality of layers of continuous fibers, wherein the interlayer-toughening veil has a melting temperature above the activation temperature of the binder.

In embodiments, applying the binder comprises applying a veil having a low-melt component and a high-melt component, wherein the low-melt component of the veil serves as the binder and the high-melt component serves as an interlayer-toughening veil.

Also disclosed are non-crimp fabrics.

In one example, the disclosed non-crimp fabric comprises: a plurality of layers of continuous fibers held together by stitch threads; and a binder structure between adjacent layers of the plurality of layers of continuous fibers and on an outer layer of the plurality of layers of continuous fibers, wherein the binder structure has an activation temperature below a melting temperature of the stitch threads.

In embodiments, the binder structure is in a form of a powder.

Optionally, the powder has little to no tack at room temperature.

In embodiments, the binder structure is in a form of a nonwoven veil.

In embodiments, the non-crimp fabric further comprises an interlayer-toughening veil between adjacent layers of the plurality of layers of continuous fibers, wherein the interlayer-toughening veil has a melting temperature above the activation temperature of the binder structure.

In embodiments, the binder structure comprises a low-melt component and a high-melt component, wherein the low-melt component of the binder structure serves as the binder and the high-melt component serves as an interlayer-toughening veil.

Also disclosed are methods for manufacturing a composite structure.

In one example, the disclosed method comprises: providing one or more layers of non-crimp fabric, each layer of non-crimp fabric comprising a plurality of layers of continuous fibers held together by stitch threads and including a binder structure between adjacent layers of the plurality of layers of continuous fibers and on an outer layer of the plurality of layers of continuous fibers, wherein the binder structure has an activation temperature below a melting temperature of the stitch threads; arranging the one or more layers of non-crimp fabric to yield a preform having a preform shape; and heating the preform to a temperature between the activation temperature of the binder structure and the melting temperature of the stitch threads, thereby activating the binder structure and maintaining the preform shape.

In embodiments, the binder structure is in a form of a powder.

Optionally, the powder has little to no tack at room temperature.

In embodiments, the binder structure is in a form of a nonwoven veil.

In embodiments, an interlayer-toughening veil is positioned between adjacent layers of the plurality of layers of continuous fibers, wherein the interlayer-toughening veil has a melting temperature above the activation temperature of the binder structure.

In embodiments, the binder structure comprises a low-melt component and a high-melt component, wherein the low-melt component serves as the binder and the high-melt component serves as an interlayer-toughening veil.

In embodiments, the method further comprises impregnating the preform with a resin.

Optionally, the method further comprises curing the resin.

Optionally, the binder structure reacts with the resin during the curing the resin.

Also disclosed are preforms.

In one example, the disclosed preform comprises: one or more layers of non-crimp fabric, each layer of non-crimp fabric comprising a plurality of layers of continuous fibers held together by stitch threads, the one or more layers of non-crimp fabric arranged to form a shape of the preform; a binder structure maintaining the shape of the preform, wherein the binder structure comprises a binder material and is between adjacent layers of the plurality of layers of continuous fibers and on an outer layer of the plurality of layers of continuous fibers, wherein the binder structure has an activation temperature below a melting temperature of the stitch threads; and wherein the stitching within the non-crimp fabric defines interstitial spaces between the plurality of layers of continuous fibers that are free of the binder material, providing pathways for resin impregnation.

In embodiments, the binder structure is in a form of a powder.

Optionally, the powder has little to no tack at room temperature.

In embodiments, the binder structure is in a form of a nonwoven veil.

In embodiments, the preform further comprises an interlayer-toughening veil between adjacent layers of the plurality of layers of continuous fibers, wherein the interlayer-toughening veil has a melting temperature above the activation temperature of the binder structure.

In embodiments, the binder structure comprises a low-melt component and a high-melt component, wherein the low-melt component serves as the binder and the high-melt component serves as an interlayer-toughening veil.

Other examples of the disclosed non-crimp fabrics, preforms and methods for manufacturing will become apparent from the following detailed description, the accompanying drawings and the appended claims.

### BRIEF DESCRIPTION OF THE DRAWINGS

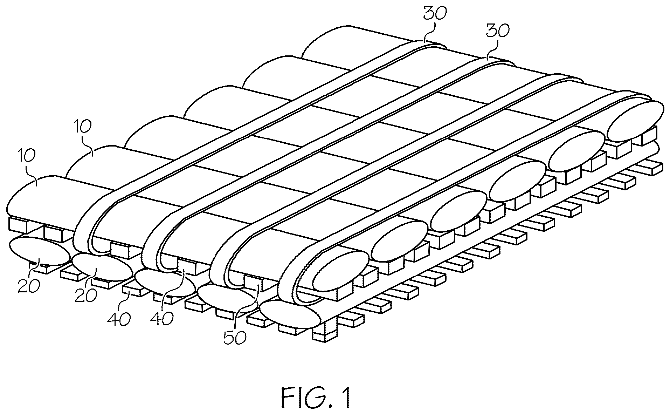

Fig. 1 is a schematic illustration of one example of a multi-layered non-crimp fabric structure, showing a bidirectional configuration with a first layer of continuous fibers oriented in one direction and a second layer oriented in a second direction. This figure also depicts stitch threads securing the internal layers of continuous fibers and a binder structure positioned between adjacent fiber layers and on the outermost surface of the non-crimp fabric stack. This figure further includes an optional interlayer-toughening veil positioned between layers of continuous fibers, enhancing impact resistance and durability in the composite structure.
Fig. 2 is a flowchart illustrating a method for manufacturing a non-crimp fabric in accordance with the present description. The method includes steps for providing multiple continuous fiber layers, applying stitch threads to secure fiber alignment, and applying a binder structure to stabilize the non-crimp fabric structure.
Fig. 3 shows lamination where a non-crimp fabric layer is unrolled and directed to laminating spools that apply binder veils to both surfaces. The structure is then heated in an oven to activate the binder, stabilizing the non-crimp fabric without impacting the stitch threads.
Fig. 4 illustrates a powder spray method for applying a binder. Binder powder is sprayed onto the non-crimp fabric as it passes under a nozzle, followed by heating to activate the binder, securing it to the non-crimp fabric while preserving stitching integrity.
Fig. 5 is a flowchart depicting a method for manufacturing a composite structure using a non-crimp fabric preform in accordance with the present description.
Fig. 6 is a cross-sectional view of a preform structure composed of multiple layers of non-crimp fabric positioned within a mold.

### DETAILED DESCRIPTION

The present description relates to a non-crimp fabric, comprising multiple layers of continuous fibers held together by stitch threads. The structure includes a binder that is applied between adjacent layers of continuous fibers to form a binder structure. The binder is also be applied to the outermost layer of the multiple layers of continuous fibers. The binder helps maintain the fabric's shape during preform handling by securing the relative positioning of the fiber layers or the relative positioning of the non-crimp fabric within the preform. The activation temperature of this binder is set below the melting temperature of the stitching material, allowing the binder to activate without affecting the stitch threads. This temperature relationship ensures that the stitch threads do not melt, thus preserving open channels for resin impregnation. The combined use of stitch threads and a binder in the non-crimp fabric supports both mechanical performance and efficient processing, making the material applicable to composite manufacturing where precise fiber alignment and effective resin flow are beneficial.

In some examples, the non-crimp fabric comprises more than two layers of continuous fibers, and the binder structure is positioned between each individual layer within the multi-layered structure. By situating the binder between every layer, the stability and alignment of the fabric are enhanced after heating the preform, preserving the intended positioning of each fiber layer within the preform structure until resin impregnation.

The non-crimp fabric is a structural material comprising layers of continuous fibers that are aligned without interlacing, resulting in a crimp-free structure. This configuration contrasts with woven fabrics, where fiber interlacing creates crimps, which can affect mechanical properties. The crimp-free alignment of fibers in non-crimp fabrics enhances load transfer along each fiber, providing improved strength, stiffness, and overall mechanical performance. Non-crimp fabrics are well-suited for composite applications requiring high impact resistance, fatigue durability, and tensile strength. Additionally, the open structure facilitates efficient resin flow during composite fabrication, making these fabrics advantageous for industries such as aerospace, automotive, and wind energy, where both lightweight materials and reliable structural performance are desired.

The non-crimp fabric may comprise multiple layers of continuous fibers, with each layer featuring specific fiber orientations that contribute to the fabric's mechanical performance. Orientations include unidirectional, bidirectional, and multiaxial arrangements, each serving distinct structural functions. In a unidirectional configuration, all fibers within a layer are aligned parallel in a single direction, optimizing the fabric for high tensile strength along that axis. This alignment is particularly effective for applications that experience concentrated loads in one direction, such as structural beams or reinforcements. In bidirectional configurations, fibers are oriented at two different angles (such as 0° and 90°) within the layer, allowing the fabric to resist loads from two different directions. Multiaxial orientations involve fibers aligned at multiple angles, such as 0°, 90°, and ±45°, creating a more versatile fabric structure capable of handling complex loads from various directions. This alignment distributes forces more evenly and enhances the resistance of structures made from such fabrics to shear and torsional stresses. Multiaxial configurations may be used in advanced composites for applications like wind-turbine blades, automotive components, and aerospace structures, where multidirectional strength and durability are important. The non-crimp fabric can be customized further by layering different orientations and/or different per-ply areal weights in succession. Adjusting the number and orientation of layers influences properties such as impact resistance and fatigue durability.

The non-crimp fabric can be constructed from a variety of fiber types, each chosen based on desired properties such as strength, stiffness, heat resistance, or chemical compatibility. Fiber types include carbon fibers, known for their strength-to-weight ratio and thermal stability; glass fibers, which offer cost-effective reinforcement with good tensile strength and moderate weight; and aramid fibers, valued for their impact resistance and energy-absorption properties. Hybrid fabrics may also be employed, combining different fiber types within the same layer or across multiple layers to achieve a balance of properties, such as combining carbon fibers for stiffness with glass fibers for improved flexibility and resilience. The selection of fiber composition allows the non-crimp fabric to be engineered for specific applications, balancing performance requirements with cost and weight considerations.

In the non-crimp fabric, stitch threads are used to secure the multiple layers of continuous fibers together without causing fiber misalignment, preserving the structural integrity of the fabric. The stitch threads not only hold the layers in place but also allow for relative movement among the fibers. This feature is advantageous during shaping, as it enables the non-crimp fabric to be arranged into a preform with a specific shape. The freedom of fiber movement minimizes the strain imposed on the fabric during shaping, reducing the likelihood of fiber breakage or misalignment and ensuring that the final preform retains the desired fiber orientation. By maintaining flexibility, the stitch threads support both strength and adaptability, making the non-crimp fabric well-suited for complex composite applications.

The stitch threads in the non-crimp fabric are selected to have a melting temperature above the activation temperature of the binder to maintain stability during binder activation without melting. Generally, the melting temperature of the stitching material ranges from 120°C to 400°C or higher, depending on the specific performance requirements. A range of 150°C to 300°C may be used for many applications, while for higher thermal demands, a range of 300°C to 400°C or above may be employed. By selecting stitching materials with melting temperatures within these ranges, the stitch threads securely hold the fiber layers throughout processing, reducing the risk of fiber misalignment or structural disruption. Additionally, by avoiding melting during binder activation, the stitch threads maintain open interstices, allowing for faster resin infusion in subsequent steps.

The stitching material in the non-crimp fabric is selected to provide stability, thermal resistance, and compatibility with the composite structure. Suitable stitching materials include high-melting-point polyester, polyamide, and aramid fibers, to ensure stability during binder activation. High-melting-point polyester has a melting temperature above 250°C, providing thermal stability and durability. Polyamides, with a melting-point range between 190-350 °C, depending on the type of polyamide and its chemistry, offer flexibility and resilience during processing, while aramid fibers, with melting points above 400°C, provide enhanced thermal resistance for applications requiring elevated temperature tolerance. The selection of stitching materials within these melting temperature ranges ensures that the stitching maintains structural integrity, holds the fiber layers securely, and keeps through-thickness pathways clear for resin flow during subsequent composite processing.

Stitching in non-crimp fabrics may be performed using textile machinery designed to attach multiple fiber layers without disturbing their alignment. The process involves laying down each fiber layer according to the desired orientation, followed by stitching them together with continuous thread paths that avoid introducing tension or distortion. Automated stitching equipment, often equipped with computer-aided design (CAD) control, allows for precise stitching placement, accommodating different stitch types and patterns. A variety of stitching patterns are used in non-crimp fabrics to achieve specific mechanical properties and facilitate resin infusion during composite processing. Common patterns include tricot, which provides lightweight support and flexibility, and chain stitching, which enhances robustness for applications requiring greater durability. Lock stitching is also employed in some cases for its strength and stability in high-stress applications. The selection of the stitching pattern can influence the fabric's flexibility and resin flow, as certain patterns create small through-thickness channels that aid in even resin distribution.

The binder structure in the non-crimp fabric is incorporated to maintain the shape of a preform after the non-crimp fabric has been arranged into its intended configuration. The binder structure may be any permeable configuration of binder material positioned between adjacent layers of continuous fibers and/or on the outermost layers of the non-crimp fabric. This structure activates at a temperature below the melting point of the stitching material, bonding the fiber layers to maintain the shape and stability of the preform while allowing open pathways for resin impregnation. It can be applied in various forms, such as powder, nonwoven veil, or hybrid configurations, providing bonding and, in some cases, additional toughening functions.

This binder structure remains inactive during shaping, allowing the layers of continuous fibers within the non-crimp fabric to move relative to each other, which minimizes strain during shaping and reduces the likelihood of fiber misalignment or breakage. Once the preform shape is finalized, the binder is activated by heating it to a specific temperature, bonding the structure and locking the preform's shape in place. The binder structure can be positioned (1) between adjacent layers of continuous fibers, where it forms internal bonds that restrict movement between each fiber layer after activation, helping to maintain alignment and stability; and (2) on one or both outer surfaces of the stack of fiber layers, where it helps secure the preform by restricting movement between the non-crimp fabric and any adjacent materials, such as another layer of non-crimp fabric, once activated. By controlling both the placement and activation of the binder structure, the preform achieves stability while avoiding unnecessary strain during shaping, supporting the fabric's alignment and readiness for subsequent composite manufacturing steps, such as resin infusion and curing.

The activation temperature of the binder structure is the temperature at which the binder material softens or melts to form bonds between adjacent fiber layers, securing the preform shape once it has been set. This activation temperature is selected to be below the melting temperature of the stitching material, ensuring that the binder activates without affecting the stitch threads. Typical activation temperatures for binder materials range broadly from 70°C to 180°C, depending on the intended bonding requirements. This selective activation stabilizes the preform structure while preserving open through-thickness channels for resin infusion during composite processing.

The binder structure in the non-crimp fabric can be applied in powder form, which allows for even distribution and precise control over coverage between the layers of continuous fibers. This powdered binder, positioned between adjacent fiber layers or also on an outer layer, activates when heated to the specified activation temperature, bonding the layers and preserving the preform shape. The powder form provides flexibility in application, ensuring uniform bonding across complex or contoured preforms, and allows the binder to be tailored to the specific bonding needs of the composite structure.

The powder binder composition is formulated to exhibit little to no tack at room temperature, allowing easy handling and positioning of the non-crimp fabric layers without prematurely adhering adjacent fiber layers to each other. This low-tack property ensures that the layers remain freely adjustable during assembly, enabling precise alignment until the preform shape is finalized. Suitable powder binder compositions include, but are not limited to thermosets, such as epoxies, bismaleimides, polyesters, acrylics, and vinyl esters as well as thermoplastics, such as polyamides, polyesters, polysulfones, polyetherketones, polyurethanes, polyimides, etc. In some examples, it is preferred that the binders reactive with the matrix resin infused into the preform, such that they become chemically incorporated into the polymer backbone of the matrix resin. Upon reaching its activation temperature, the powder binder softens or melts, bonding the fiber layers securely in place while preserving open pathways for efficient resin infusion during subsequent composite processing.

The binder structure can also be implemented as a nonwoven veil, a thin, flexible sheet positioned between fiber layers and optionally also on an outer layer of the fabric stack. When heated to its activation temperature, the nonwoven veil bonds the fabric layers in place to maintain the preform shape. This veil structure allows for even bonding coverage across the fabric and conforms to complex contours, ensuring uniform adhesion. Additionally, the nonwoven veil's open structure supports resin permeability, making it suitable for composite applications that require both stable bonding and resin flow.

The nonwoven veil binder structure is composed of thermoplastic fibers that activate at specific temperatures to form bonds between fiber layers without interfering with resin flow. Suitable materials for the nonwoven veil include polyamide, polyimide, polyamide-imide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate, polyethylene terephthalate, polyester-polyarylate (e.g., VECTRAN^{™}). The open structure of these veils ensures that resin can permeate effectively through the bonded layers, making these compositions suitable for applications requiring both stable bonding and efficient resin infusion during composite manufacturing.

An interlayer-toughening veil may also be positioned between adjacent layers of continuous fibers in the non-crimp fabric to improve impact resistance and toughness. The interlayer-toughening veil can be placed together in the same interlayer space as the nonwoven veil binder structure. When positioned together in the same interlayer space as the nonwoven veil binder structure, the two veils can act together to provide both bonding and toughening functions within a single layer. Alternatively, separately placing the interlayer-toughening veil allows for independent reinforcement, isolating toughening functions where additional impact resistance is required without affecting the binder structure's primary bonding locations. This arrangement provides flexibility in design, allowing for precise control over the composite's structural and impact properties while maintaining open pathways for resin flow during processing.

The interlayer-toughening veil is selected to have a melting temperature above the activation temperature of any binder, ensuring it remains stable during binder activation. This stability allows the interlayer-toughening veil to provide structural reinforcement without compromising the binder structure's bonding function. The melting temperature of the interlayer-toughening veil generally ranges from 120°C to 300°C, depending on the specific thermal and mechanical requirements of the composite. In applications requiring moderate thermal resistance, a melting temperature range of 150°C to 250°C may be used, while for higher thermal demands, materials with melting temperatures exceeding 250°C may be preferred. Selecting an appropriate melting temperature for the interlayer-toughening veil ensures it can perform its toughening function effectively without interfering with binder activation.

The interlayer-toughening veil is composed of fibers or materials specifically selected to enhance the toughness and durability of the composite. Suitable materials include polyamide, polyimide, polyamide-imide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate, polyethylene terephthalate, polyester-polyarylate (e.g. VECTRAN^{™}), polyaramid (e.g. KEVLAR^{™}), polybenzoxazole (e.g. ZYLON^{™}), viscose (e.g. RAYON^{™}), carbon-fiber, and glass-fiber.

A hybrid veil may be incorporated to provide both bonding and toughening functions within the non-crimp fabric. This hybrid veil includes a combination of low-melt and high-melt components, with each component fulfilling a specific role. The low-melt component serves as the binder, with an activation temperature below the melting point of the stitching material, allowing it to bond adjacent fiber layers without affecting the stitch threads. The high-melt component functions as an interlayer-toughening veil, enhancing impact resistance and durability, with a melting temperature above the binder activation range to remain stable during bonding. The hybrid veil can be constructed by interlacing or blending low-melt and high-melt fibers within a single nonwoven structure, or by layering separate sheets of each material to form a multi-functional veil. For example, a hybrid veil may incorporate low-melting-point polyester fibers (activation range 100°C to 140°C) as the binder component and aramid fibers (melting above 400°C) as the toughening component. The low-melt polyester fibers activate to bond layers upon heating, while the aramid fibers remain intact, providing structural reinforcement. Likewise, a bicomponent veil may be fabricated by combining high- and low-melting-point variants of a single polymer type, such as the use of two different polyamide variants with, for example, a copolyamide having a low melting point comprising one portion and a different polyamide or copolyamide having a higher melting point comprising the other portion and combining them as described above. By combining these components, the hybrid veil enables integrated bonding and toughening within a single layer, optimizing both structural integrity and impact resistance in the composite. The hybrid veil may be positioned between adjacent fiber layers or on an outer surface of the fabric stack, offering flexibility in composite design and enhancing the performance of the non-crimp fabric in demanding applications.

Fig. 1 illustrates an example of the multi-layered non-crimp fabric structure in accordance with the present description. In this example, the non-crimp fabric structure comprises a first layer (10) of continuous fibers aligned in parallel and a second layer (20) of continuous fibers also aligned in parallel. Notably, the fibers in the first layer are arranged perpendicularly to those in the second layer, providing a bidirectional configuration. However, it would be understood by those skilled in the art that additional layers may be added, and other orientations of fiber alignment (e.g., unidirectional or multiaxial configurations) may be implemented to achieve specific mechanical properties tailored to the application. The stitch threads (30) illustrated in Fig. 1 are provided to secure the layers together and the arrangement of the threads shown here merely for illustrative purposes. Various stitching patterns and techniques may be employed, depending on the number of layers, the specific fiber orientations, and the types of fibers used. Such variations would be well understood by persons skilled in the art, who could select suitable stitching patterns based on the composite structure's intended performance requirements.

A representative binder structure (40) is positioned between the first and second layers of continuous fibers in Fig. 1, depicted as a binder veil layer. This binder structure helps maintain the structural integrity of the non-crimp fabric structure by stabilizing the relative positioning of the fiber layers during preform handling and subsequent processing stages. While the binder structure is shown as a veil, it should be noted that a powder binder structure could also be used instead, depending on processing requirements and desired properties. The binder structure (40) is also be positioned on the outermost layer of the continuous fiber stack, enhancing stability during handling and processing. The binder has an activation temperature lower than the melting temperature of the stitch threads, allowing it to activate and bond the layers securely without compromising stitch-thread integrity.

Additionally, Fig. 1 can also include an optional interlayer-toughening veil (50) positioned between the layers of continuous fibers. This toughening veil is designed to enhance the composite's impact resistance and durability by providing additional reinforcement between fiber layers. While the interlayer-toughening veil (50) is shown here, it should be understood that this veil may be included in other configurations of the non-crimp fabric structure if enhanced toughness is desired. Furthermore, Fig. 1 may incorporate a hybrid veil that provides both bonding and toughening functions. Such a hybrid veil may include a low-melt component to serve as the binder and a high-melt component to serve as an interlayer-toughening veil. This dual-function veil could be positioned between adjacent fiber layers or on an outer surface of the fiber stack, offering flexibility in design and enhancing the non-crimp fabric's performance in demanding applications.

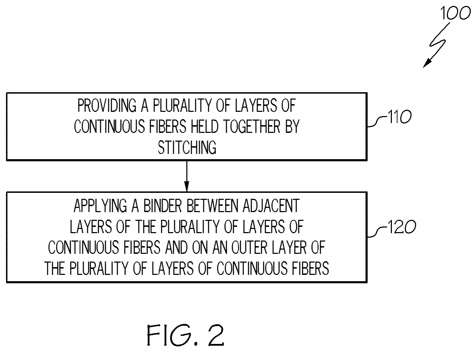

Fig. 2 provides a flow chart illustrating Method 100 for manufacturing a non-crimp fabric in accordance with the present description, aligning with the steps of claim 1. Step 110 begins by providing a plurality of layers of continuous fibers. The continuous fibers within each layer may be aligned without interlacing to maintain a crimp-free structure and optimize load-transfer properties. The layers are stitched together to secure them while preserving their orientation, using stitching materials with melting points above the activation temperature of the binder. Step 120 involves applying a binder structure between adjacent layers of continuous fibers or also on an outer layer of the fiber stack of layers of continuous fibers. The binder structure, which may be applied either before or after the stitch threads, can be in powder form, as a nonwoven veil, or as a hybrid veil with low-melt and high-melt components. Its activation temperature is set below the stitch thread's melting temperature, allowing activation without compromising stitch thread integrity. This binder structure stabilizes the preform while maintaining flexibility for shaping, with further elaboration provided below.

In one approach, the non-crimp fabric can be manufactured using any standard method known in the art. Typically, non-crimp fabrics are constructed by arranging multiple layers of continuous fibers in specific orientations to achieve a crimp-free structure. These continuous fibers can be aligned in unidirectional, bidirectional, or multiaxial configurations, depending on the desired mechanical properties of the final composite. Each layer is aligned in parallel, without interlacing, to avoid crimping and to maximize load transfer along the fibers. Once the fiber layers are aligned, they are secured through stitch threads. Various stitching patterns, such as tricot, chain stitch, or lock stitch, can be employed, depending on the number of layers, fiber orientations, and types of fibers used. Stitching is performed in a manner that minimizes fiber misalignment, thus preserving the structural integrity of the fabric and supporting flexibility for shaping into preforms. Stitching materials are typically selected for their high melting points to ensure they remain stable during any subsequent binder activation. After stitching, the non-crimp fabric structure is ready for further processing or for application of a binder structure.

In certain examples, a binder structure is applied on the outermost layer of the previously manufactured non-crimp fabric. The binder structure may be positioned on one or both sides of the non-crimp fabric to enhance preform stability during preform handling and subsequent composite processing. The binder structure can be applied using various exemplary methods. In one approach, a powdered binder is sprayed onto the outer surface(s) of the non-crimp fabric, allowing for controlled distribution across the fabric. Alternatively, a nonwoven binder veil may be laminated onto one or both outer surfaces of the non-crimp fabric. This lamination method provides uniform coverage and additional bonding strength, which can be advantageous for applications requiring enhanced stability. After the binder structure is applied, heat treatment is performed to adhere the binder structure securely to the outer layer of the non-crimp fabric. During this step, the non-crimp fabric is heated to a temperature above the activation temperature of the binder but below the melting temperature of the stitch threads and any optional interlayer-toughening veil. This selective heating ensures that the binder activates and bonds to the fiber layers without compromising the integrity of the stitch threads or other structural components. By performing this heat treatment, the binder structure bonds effectively to the outer layer(s) of the non-crimp fabric, enhancing the stability of the fabric and securing the preform shape.

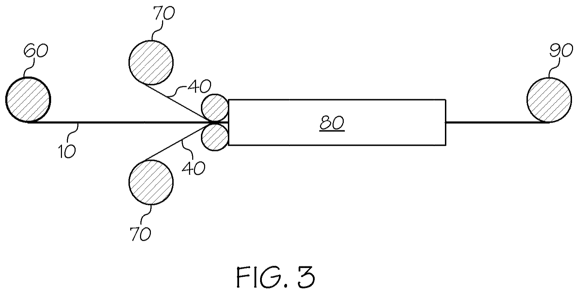

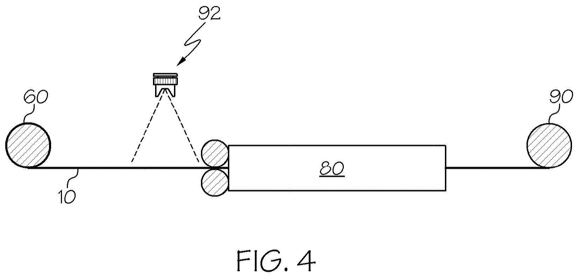

Figs. 3 and 4 illustrate two different methods for applying binder to each layer of a non-crimp fabric structure prior to stitching, ensuring that the binder remains inactive for flexibility during preform shaping. In one approach, fibers are taken from spools and spread into a band, cut to length, and then held in place (generally by clamping) at either end of the band within the machine bed. This process is performed repeatedly for each layer, except for the 0-degree fibers, which are continuous along the length of the machine bed. Fig. 3 depicts fabric lamination, where a binder in the form of nonwoven veils is applied to the top and/or bottom surfaces of each individual layer of continuous fibers as it is positioned on the machine bed, rather than after unrolling a complete layer. Each fiber layer with the binder is then lightly heated to secure the binder to that single layer without fully activating it. This low-level heat treatment merely affixes the binder to each fiber layer for handling and stitching, preventing premature bonding that would restrict drapability. Once all layers have been positioned with binder and lightly adhered, they are stitched together with stitch threads (30), which maintain alignment without restricting inter-layer movement. After stitching, the non-crimp fabric structure with inactive binder is rolled onto an output spool (90) for transport. In subsequent processing steps, after shaping the non-crimp fabric into a preform, controlled heating is applied to activate the binder and stabilize the preform shape.

Fig. 4 shows an alternative approach using a powder spray method to apply binder to each individual layer of continuous fibers before stitching. Here, each layer within the non-crimp fabric is unrolled from an input spool (60) and conveyed under a spray nozzle (92), which disperses powdered binder onto one side of each layer. Applying binder to only one side avoids potential issues associated with coating both sides. When the layers are assembled, binder is available between each ply, providing adequate bonding during later processing. After powder application, each layer passes through an oven (80) that provides light heating, enough to adhere the binder powder to the fiber surface without fully activating it. Similar to the lamination method, this heat treatment merely secures the binder for stacking and stitching. In some setups, binder application may be done continuously, but it can also be performed by preparing binderized unidirectional fabric that is subsequently fed into the warp-knitting machine to produce the non-crimp fabric. Once each layer has been treated, the layers are stacked and stitched together with stitch threads (30), preserving binder placement between each layer while allowing flexibility. The completed non-crimp fabric structure with inactive binder is then rolled onto an output spool (90) for transport. Later, after shaping the non-crimp fabric into a preform, the binder is activated through controlled heating to lock the preform shape.

In another approach, manufacturing of the non-crimp fabric can be modified to incorporate a binder structure between selected substacks of continuous fiber layers during assembly, keeping the binder inactive throughout this stage. This integrated approach can provide internal bonding potential within the fabric structure, enhancing stability and fiber alignment after shaping, but it may reduce the flexibility, or drapability, of the non-crimp fabric, which is essential for complex preform shaping. Conventional non-crimp fabric manufacturing machines are typically not designed to stitch individual layers with binder structures between each layer; instead, they may stitch two or more substacks together. However, stitching substacks with binder between them can make the fabric too rigid for certain applications, where high drapability is necessary for conforming to intricate preform shapes. To create the non-crimp fabric, continuous fibers-such as carbon, glass, or aramid-are selected based on the required mechanical properties of the final composite. These fibers are prepared in continuous lengths and aligned to avoid crimping, supporting effective load transfer along the fibers. Each layer of continuous fibers is laid down in a specific orientation, such as unidirectional, bidirectional, or multiaxial, according to the intended properties of the non-crimp fabric. As each fiber layer is dispensed onto the machine bed of a warp-knitting apparatus, a binder structure can be introduced between adjacent substacks, either in powder form (evenly distributed across each fiber layer) or as a nonwoven veil. Layering of continuous fibers and insertion of binder structures continues as needed to achieve the desired stack configuration. Various stitching patterns, such as chain stitch, lock stitch, or tricot, may be employed depending on the number of layers, fiber types, and orientations. Stitching materials are selected with high melting points to ensure they remain stable in later processing. The stitch threads secure the layers in place, preserving fiber alignment and flexibility within the non-crimp fabric structure. After all layers and binder structures have been arranged and secured with stitch threads, the non-crimp fabric structure is prepared for shaping into the desired preform. At this stage, the binder structure remains inactive, allowing the fabric to retain flexibility and move relative to each other as needed for shaping. By incorporating the binder structure at the ply level and keeping it unactivated, the non-crimp fabric achieves some internal stability while maintaining enough adaptability for shaping, although applications needing high drapability may benefit from alternative configurations.

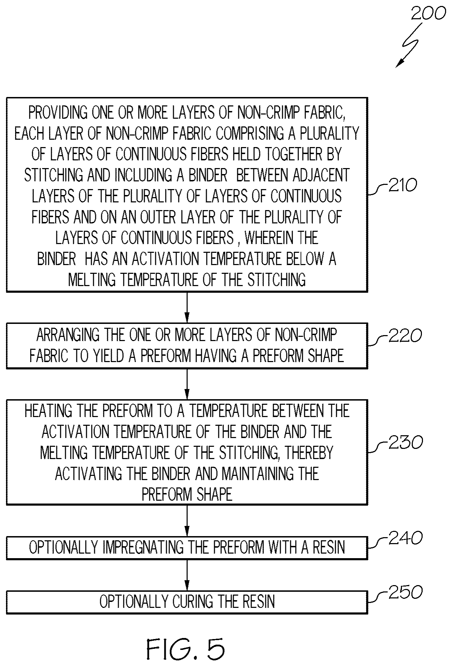

The present description also encompasses a method for manufacturing a composite structure, which includes forming a preform using non-crimp fabric layers. This method leverages the structural benefits of non-crimp fabrics, which provides crimp-free, continuous-fiber layers held together by stitch threads, in combination with a binder structure that stabilizes the shape of the preform during processing. The steps involved in manufacturing the composite structure are illustrated in the flow chart of Fig. 5.

Fig. 5 illustrates Method (200), a process for manufacturing a composite structure using non-crimp fabric layers. The method begins with Step (210), which involves providing one or more layers of non-crimp fabric. Each non-crimp fabric layer comprises multiple continuous fiber layers aligned in a crimp-free configuration, held together by stitch threads that maintain the fibers' alignment and structural integrity. A binder structure is also included, positioned between adjacent fiber layers or also on an outermost layer. This binder structure has an activation temperature below the melting temperature of the stitch threads, allowing selective activation, without affecting the stitch threads.

Following the preparation of the non-crimp fabric layers, Step (220) involves arranging the layers into a preform shape suitable for composite processing. The stitch threads in the non-crimp fabric layers provides the necessary flexibility to shape the layers while preserving fiber alignment and stability. This enables precise preform design tailored to the composite's intended structural requirements.

In Step (230), the preform is heated to a controlled temperature between the activation temperature of the binder structure and the melting temperature of the stitch threads. This selective heating activates the binder structure, bonding the fiber layers together while preserving the stitch threads, which maintains open interstitial channels for resin impregnation in subsequent steps. This controlled activation stabilizes the preform, allowing it to maintain its shape throughout subsequent processing.

Following activation of the binder structure, Step (240) involves impregnating the preform with a resin to complete the composite structure. The open interstitial channels maintained by the stitch threads facilitate through-thickness resin flow, allowing rapid, uniform impregnation across all fiber layers. Various types of resins can be used depending on the desired mechanical properties, thermal stability, and environmental resistance of the final composite. Suitable resins include, but are not limited to, epoxy resins, polybenzoxazines, bismaleimides, polyimides, polyester resins, vinyl ester resins, mixtures of various compatible resin types (such as epoxies and benzoxazines), and phenolic resins. Epoxy resins are commonly used for their high mechanical strength and chemical resistance, making them ideal for applications that require durability under stress. Polyester resins offer cost-effective reinforcement with good tensile properties, while vinyl ester resins provide enhanced chemical and heat resistance, suitable for harsh environments. Phenolic resins may be selected for applications requiring high fire resistance and low smoke emission. The resin is applied to the preform by infusion, which may be achieved using vacuum-assisted resin transfer molding (VARTM), resin transfer molding (RTM), or other suitable impregnation techniques. During infusion, the resin is drawn into the preform under controlled pressure, ensuring complete wet-out of the fibers within each layer of the non-crimp fabric. The vacuum or pressure assists in minimizing voids within the composite structure, promoting consistency and mechanical reliability. Impregnation may be conducted at ambient or elevated temperatures, depending on the resin's viscosity, reactivity, and flow characteristics, which should be optimized to achieve complete and uniform resin distribution throughout the preform.

Once the preform is fully impregnated with resin, Step (250) involves curing the resin to harden the structure and finalize the composite's mechanical properties. Curing can be performed at ambient or elevated temperatures, depending on the resin system. For example, epoxy resins may require curing temperatures ranging from 80°C to 180°C, typically held for 30 minutes to 6 hours, depending on the specific formulation and thickness of the composite structure. Elevated-temperature curing may be conducted in an oven, autoclave, or using a heated press, ensuring consistent thermal distribution and complete polymerization of the resin. Some resins, such as room-temperature-curing epoxies or polyester resins, can cure at ambient conditions over extended periods, which may be advantageous for applications requiring lower energy input or for manufacturing larger parts. In such cases, curing agents or accelerators may be added to the resin to control the curing speed and optimize the final composite's properties. Curing under pressure, particularly in an autoclave or a closed mold, can enhance the composite's quality by reducing porosity, increasing fiber-to-resin contact, and improving mechanical properties. The completed cure solidifies the resin, firmly bonding the layers of the preform and locking in the fiber alignment initially established by the non-crimp fabric and stitch threads. This creates a unified, high-strength composite structure suitable for various demanding applications where enhanced load-bearing capacity, durability, and environmental resistance are required. The method thus provides a robust approach to manufacturing composites with controlled fiber alignment, resin impregnation, and curing, achieving a composite structure with optimal mechanical and structural performance.

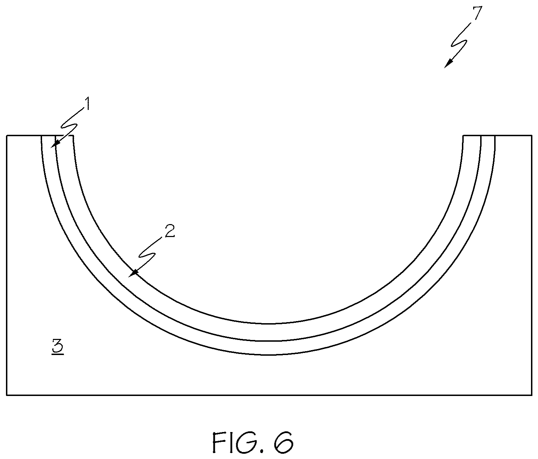

In another example, the present description relates to a preform structure used as an intermediate product in composite manufacturing. Fig. 6 illustrates an example of this preform, which is composed of one or more layers of non-crimp fabric arranged to form a stable, shape-retaining configuration designed to facilitate efficient resin impregnation and composite processing.

Each layer of non-crimp fabric in the preform structure can be comprised of multiple layers of continuous fibers. These layers are held together by stitch threads within the non-crimp fabric layer, which ensures the alignment of fibers and maintains a crimp-free configuration. This internal structure of each non-crimp fabric layer, as illustrated in Figs. 1 and 2, preserves optimal load transfer characteristics and mechanical performance, with the stitch threads securing each layer of continuous fibers without affecting inter-layer flexibility. The preform (7), as shown in Fig. 6, is composed of multiple non-crimp fabric layers, represented by the first layer (1) and the second layer (2), arranged within a mold (3) in the desired shape for composite processing.

A binder structure is incorporated within the non-crimp fabric to stabilize and maintain the preform's shape. This binder structure may be positioned between adjacent layers of continuous fibers within each non-crimp fabric layer or also on the outermost layer. The binder is selected with an activation temperature below that of the stitching material's melting point, ensuring that it can secure the fiber layers in the desired shape without compromising the stitching integrity. This selective activation of the binder structure locks the fiber layers within each non-crimp fabric layer into the preform shape, maintaining stability throughout handling and resin impregnation.

The preform includes interstitial spaces between the layers of continuous fibers within each non-crimp fabric layer, which are free of the binder material. These through-thickness open channels are important for resin flow during subsequent resin impregnation, allowing for rapid, uniform resin distribution throughout the fiber structure. This resin permeability feature helps to minimize voids and supports the creation of a strong, cohesive composite structure.

In some configurations, the binder structure is applied as a powder, allowing controlled distribution and coverage between fiber layers. This powdered binder may be formulated with little to no tack at room temperature, facilitating easy handling and precise positioning of each non-crimp fabric layer during preform assembly. Upon heating, the powder binder softens or melts, bonding the fiber layers securely and stabilizing the preform.

Alternatively, the binder structure may be implemented as a nonwoven veil-a thin, flexible sheet that can be positioned between the multiple layers of continuous fibers within each non-crimp fabric layer or also on the outer surface of the non-crimp fabric stack. This nonwoven veil provides uniform bonding across the fabric surface, conforms to complex contours within the preform, and maintains open channels for through-thickness resin flow, enabling efficient impregnation in later stages.

For applications requiring added impact resistance and toughness, an interlayer-toughening veil may be incorporated within the preform, positioned between individual layers of continuous fibers within each non-crimp fabric layer or also between adjacent non-crimp fabric layers. This toughening veil has a melting temperature above the binder activation temperature, ensuring stability during binder activation. Its inclusion reinforces the preform structure, enhancing durability and impact resistance in the final composite.

In certain configurations, the binder structure may be a hybrid veil comprising both low-melt and high-melt components. The low-melt component activates at a lower temperature to bond the fiber layers within each non-crimp fabric layer, while the high-melt component serves as an interlayer-toughening veil, providing additional strength and resilience. This dual-function hybrid veil enables the preform to retain its shape effectively while offering increased toughness, meeting the demands of high-performance composite applications.

The described preform structure integrates the benefits of a non-crimp fabric with a selectively activatable binder structure, creating a shape-stabilized, resin-permeable intermediate product. This design enables the preform to be customized for specific applications, such as by incorporating powdered binders, nonwoven veils, or hybrid toughening layers. By preserving open resin flow channels and enhancing structural stability, this preform configuration supports efficient composite processing, making it suitable for applications in aerospace, automotive, wind energy, and other industries where high structural integrity and processing efficiency are desired.

In summary, the described non-crimp fabric and preform configurations present an innovative approach to achieving precise fiber alignment, enhanced structural stability, and efficient resin impregnation for composite manufacturing. Each non-crimp fabric layer comprises multiple layers of continuous fibers held together by stitch threads, preserving a crimp-free structure that optimizes load transfer and mechanical integrity. This layered structure allows for various fiber orientations, including unidirectional, bidirectional, and multiaxial configurations, which can be customized to suit specific application requirements and improve strength, stiffness, impact resistance, and fatigue durability.

A selectively activatable binder structure, positioned between layers of continuous fibers or also on the outermost surface of the non-crimp fabric, provides an advantage in stabilizing the shape of the preform during shaping, handling, and processing. The binder structure's activation temperature is tailored to be below the melting point of the stitching material, allowing the preform shape to be locked in place without compromising the open channels for resin flow. This ensures that the integrity of the stitch threads and alignment of fiber layers are preserved throughout processing.

Various examples of the binder structure, including powdered binders, nonwoven veils, and hybrid veils, allow for adaptable preform configurations. Each example supports open interstitial spaces between fiber layers for effective resin impregnation and bonding during composite manufacturing. In addition, interlayer-toughening veils or hybrid veils with dual low-melt and high-melt components provide enhanced impact resistance and durability, enabling these preforms to meet demanding application requirements in industries such as aerospace, automotive, and renewable energy.

The disclosed method for manufacturing a composite structure further optimizes the impregnation and curing of the preform. By controlling the activation of the binder structure and ensuring the availability of open, through-thickness resin flow pathways, the method achieves rapid, uniform resin distribution across all fiber layers. Subsequent resin curing, which can be performed at ambient or elevated temperatures, finalizes the composite's mechanical properties, producing a high-strength, cohesive structure with reduced void content and superior load-bearing capability.

In certain examples, the binder structure is formulated to be chemically reactive with the resin used for impregnating the preform. During curing, the binder structure interacts with the resin, becoming chemically incorporated into the matrix resin. This reactive bonding further enhances the cohesion between fiber layers, creating a unified composite structure with improved mechanical integrity. By forming covalent bonds with the matrix resin, the binder contributes to the overall stability and durability of the final composite. This reactive bonding allows for a more seamless integration between the binder and resin, reducing the likelihood of delamination and enhancing load transfer across fiber layers in the composite structure.

The described non-crimp fabric preforms and composite manufacturing methods represent robust solutions for high-performance composite fabrication. By leveraging the combination of precise fiber alignment, customizable binder structures, and efficient resin flow pathways, the disclosed examples enable composite structures with optimized mechanical and thermal properties. This versatility makes the disclosed invention suitable for a wide range of applications where structural integrity, impact resistance, and processing efficiency are desired.

Although various examples of the disclosed non-crimp fabric, preform formed therefrom, and methods of composite structure manufacturing have been shown and described, it will be understood by those skilled in the art that modifications may be made without departing from the scope and intent of the invention. The present application includes such modifications and is limited only by the scope of the claims.

## Claims

1. A method for manufacturing a non-crimp fabric, the method comprising:
providing a plurality of layers (10, 20) of continuous fibers held together by stitch threads (30); and
applying a binder between adjacent layers of the plurality of layers (10, 20) of continuous fibers and on an outer layer of the plurality of layers (10, 20) of continuous fibers, wherein the binder has an activation temperature below a melting temperature of the stitch threads.

2. The method of Claim 1, wherein the binder is applied before the stitch threads (30).

3. The method of Claim 1 or 2, wherein the binder is applied on the outer layer of the plurality of layers (10, 20) of continuous fibers after the stitch threads (30) are applied.

4. The method of Claim 1, 2, or 3, wherein the non-crimp fabric comprises a first layer (10) of continuous fibers aligned in parallel and a second layer (20) of continuous fibers also aligned in parallel, wherein the fibers in the first layer are arranged perpendicularly to those in the second layer, providing a bidirectional configuration.

5. A non-crimp fabric, comprising:
a plurality of layers (10, 20) of continuous fibers held together by stitch threads (30); and
a binder structure (40) between adjacent layers of the plurality of layers of continuous fibers and on an outer layer of the plurality of layers of continuous fibers, wherein the binder structure (40) has an activation temperature below a melting temperature of the stitch threads.

6. The non-crimp fabric of Claim 5, wherein the binder structure (40) is in a form of a powder.

7. The non-crimp fabric of Claim 6, wherein the powder has little to no tack at room temperature.

8. The non-crimp fabric of Claim 5, wherein the binder structure (40) is in a form of a nonwoven veil.

9. The non-crimp fabric of any one of Claims 5-8, further comprising an interlayer-toughening veil (50) between adjacent layers of the plurality of layers of continuous fibers, wherein the interlayer-toughening veil has a melting temperature above the activation temperature of the binder structure.

10. The non-crimp fabric of Claim 5, wherein the binder structure (40) comprises a low-melt component and a high-melt component, wherein the low-melt component of the binder structure serves as the binder and the high-melt component serves as an interlayer-toughening veil.

11. A method for manufacturing a composite structure, the method comprising:
providing one or more non-crimp fabric layers (1, 2), each non-crimp fabric layer (1, 2) comprising a non-crimp fabric according to any one of claims 5-10;
arranging the one or more non-crimp fabric layers (1, 2) to yield a preform (7) having a preform shape; and
heating the preform to a temperature between the activation temperature of the binder structure (40) of the non-crimp fabric and the melting temperature of the stitch threads (30), thereby activating the binder structure (40) and maintaining the preform shape.

12. The method of Claim 11, further comprising impregnating the preform (7) with a resin.

13. The method of Claim 12, further comprising curing the resin.

14. The method of Claim 13, wherein the binder structure reacts with the resin during the curing the resin.

15. A preform (7), comprising:
one or more non-crimp fabric layers (1, 2), each non-crimp fabric layer (1, 2) comprising a non-crimp fabric according to any one of claims 5-10, the one or more non-crimp fabric layers (1, 2) arranged to form a shape of the preform (7);
the binder structure (40) of the non-crimp fabric maintaining the shape of the preform (7); and
wherein the one or more non-crimp fabric layers (1, 2) define interstitial spaces between the plurality of layers (10, 20) of continuous fibers that are free of the binder material, providing pathways for resin impregnation.
